# EUROPÄISCHE PATENTANMELDUNG

(11) **EP 0 885 640 A1**
(43) Veröffentlichungstag der Anmeldung: **23.12.1998**
(21) Anmeldenummer: 98111273.3
(22) Anmeldetag: 18.06.1998
(51) Int. Cl.: B01D 17/028, B01D 17/022, B01D 17/025, E03F 5/16, C02F 1/40

(54) **Flüssigkeitsabscheider**

(30) Priorität: 21.06.1997 DE 19726488
(71) Anmelder: Benkeser, Michael, 77886 Lauf (DE)
(72) Erfinder: Benkeser, Michael, 77886 Lauf (DE)
(74) Vertreter: Lasch, Hartmut Dipl.-Ing.

(57) **Zusammenfassung**

Ein Flüssigkeitsabscheider insbesondere zum Trennen von Gemischen aus Wasser und spezifisch leichteren Flüssigkeiten wie Öl, Benzin, Fett oder dergleichen besitzt einen Abscheiderbehälter, der einen Einlaß und einen Auslaß aufweist. In den Abscheiderbehälter ist ein Einsatzbehälter angeordnet, der einen Zulauf und einen Ablauf sowie zumindest eine Leitwand aufweist, die einen Strömungskanal zwischen dem Zulauf und dem mit dem Auslaß des Abscheiderbehälters verbundenen Ablauf definiert. Der Strömungskanal umfaßt zumindest zwei parallel verlaufende, nacheinander durchströmte Kanalabschnitte und besitzt somit vorzugsweise einen U-förmigen oder einen mäanderförmigen Verlauf. Der Strömungskanal verlängert die Strömungswege derart, daß zur Erzielung einer ausreichenden Abscheiderwirkung der Einsatzbehälter als einziges Einbauteil des Abscheiderbehälters vorgesehen sein kann.

## Beschreibung

Die Erfindung betrifft einen Flüssigkeitsabscheider insbesondere zum Trennen von Gemischen aus Wasser und spezifisch leichteren Flüssigkeiten wie Öl, Benzin, Fett oder dergleichen, mit einem Abscheiderbehälter, der einen Einlaß und einen Auslaß aufweist, und mit einem im Abscheiderbehälter angeordneten Einsatzbehälter, dessen Ablauf mit dem Auslaß des Abscheiderbehälters verbunden ist.

Für die Reinigung von Öl- bzw. Benzin-Wasser-Gemischen werden auch heute noch in vielen Fällen Leichtflüssigkeitsabscheider in Form von reinen Schwerkraftabscheidern verwendet, bei denen die spezifisch leichteren Anteile an die Oberfläche der im Abscheiderbehälter befindlichen Flüssigkeit aufsteigen und sich dort ansammeln, während die spezifisch schwereren Teilchen auf den Boden des Abscheiderbehälters sinken. Da die reinen Schwerkraftabscheider den gehobenen Ansprüchen an die Reinigungsleistung nicht mehr in allen Fällen genügen können, wurden Koaleszenzabscheider entwickelt, bei denen neben dem Schwerkraftprinzip Koaleszenzfilter eingesetzt werden, um auch feinste dispergierte Öltröpfchen durch oberflächenaktives Material zurückzuhalten und zu größeren Öltröpfchen umzubilden, die dann wiederum nach dem Schwerkraftprinzip aufsteigen. Während früher der Koaleszenzabscheider einem Schwerkraftabscheider, der aus einem Leichtflüssigkeitsabscheider und einer Schlammfangvorrichtung bestehen kann, nachgeschaltet und vor einer Probenentnahmevorrichtung eingebaut war, findet heutzutage in der Regel eine sogenannte integrierte Anlage Verwendung, bei der die einzelnen Reinigungsbehälter bzw. Aggregate nicht als jeweils separates Bauteil ausgebildet und hintereinander angeordnet, sondern innerhalb des Abscheiderbehälters vorgesehen sind. Auf diese Weise sind die Schlammfangvorrichtung, der Leichtflüssigkeitsabscheider und der Koaleszenzabscheider vollständig in nur einem Abscheiderbehälter integriert, ohne daß sie zusätzlichen Bauraum erfordern.

Bei integrierten Flüssigkeitsabscheidern tritt jedoch das Problem auf, daß die in dem Abscheiderbehälter angeordnete Aggregate, d. h. insbesondere die Schlammfangvorrichtung und der Leichtflüssigkeitsabscheider einer wesentlichen Baugrößenbeschränkung durch den Abscheiderbehälter unteworfen sind.

Sowohl für die Funktion der Schlammfangvorrichtung als auch für den Leichtflüssigkeitsabscheider ist es zur Erzielung eines hohen Abscheidergrades notwendig, daß die Schlammanteile bzw. die leichten Flüssigkeitströpfchen ausreichend Zeit haben, um sich am Boden abzusetzen bzw. in beruhigter Strömung aufzusteigen und sich durch Anlagerung zu vergrößern. Um die Verweilzeit im Flüssigkeitsabscheider zu verlängern, ist es bekannt, im Abscheiderbehälter eine Vielzahl von Leitwänden vorzusehen, um daß zu reinigende Flüssigkeitsgemisch zwischen dem Einlauf und dem Eintritt in den eingesetzten Behälter auf einem definierten, möglichst langen Strömungsweg zu führen. Die Montage von Leitwänden in dem Abscheiderbehälter ist jedoch aufgrund der sehr beengten Platzverhältnisse schwierig und somit zeitaufwendig und teuer.

Der Erfindung liegt die Aufgabe zugrunde, einen Flüssigkeitsabscheider der genannten Art so weiterzubilden, daß ein hoher Abscheidergrad bei einfachen und insbesondere kostengünstigem konstruktiven Aufbau erreicht werden kann.

Diese Aufgabe wird erfindungsgemäß durch einen Flüssigkeitsabscheider gemäß Anspruch 1 gelöst, bei dem der Strömungskanal und somit die ihn bildenden Leitwände vollständig oder zumindest überwiegend in dem Einsatzbehälter ausgebildet und angeordnet sind. Auf diese Weise ist der wesentliche Vorteil gegeben, daß der Einsatzbehälter mit den Leitwänden außerhalb des Abscheiderbehälters vorgefertigt und anschließend als fertiges Modul in den Abscheiderbehälter eingesetzt werden kann. Es hat sich gezeigt, daß auf diese Weise eine wesentlich vereinfachte Montage der Leitwände und somit insgesamt eine kostengünstige Herstellung des Flüssigkeitsabscheiders möglich ist.

Dabei ist insbesondere vorgesehen, daß der Strömungskanal zumindest zwei parallel verlaufende, nacheinander durchströmte Kanalabschnitte aufweist, so daß er einen U-förmigen oder einen mäanderförmigen Verlauf hat. Ein derart ausgebildeter Strömungskanal bringt einen langen Strömungsweg bei günstiger Ausnutzung des im Einsatzbehälter vorhandenen Raumes mit sich.

Ein mäanderförmiger Verlauf des Strömungskanal läßt sich in konstruktiv einfacher Weise erzielen, wenn mehrere ebene Leitwände im Abstand versetzt zueinander angeordnet sind, so daß der Strömungsweg immer um die einzelnen Leitwände herumgeführt wird, wobei die Leitwände vertikal und/oder horizontal ausgerichtet sein können. Am Ende des Strömungskanals tritt die Flüssigkeit durch einen Ablauf, der in bekannter Weise mit einem Schwimmer gesteuerten Verschluß versehen sein kann, in ein Steigrohr ein und gelangt so zum Auslaß des Abscheiderbehälters.

Es hat sich gezeigt, daß bei entsprechender Ausbildung des erfindungsgemäßen mäanderförmigen Strömungskanals auch dann eine ausreichende Reinigung des Abwassers erreicht wird, wenn der Einsatzbehälter das einzige Einbauteil des Abscheiderbehälters ist, d.h. insbesondere im Abscheiderbehälter außerhalb des Einsatzbehälters keine weiteren Leitwände angeordnet sind. In diesem Fall wirkt das Volumen des Abscheiderbehälters außerhalb des Einsatzbehälters ohne räumliche Trennung gleichzeitig als Schlammfangvorrichtung und Leichtflüssigkeitsabscheider, während im Einsatzbehälter die Feinreinigung des Abwassers erfolgt. Diese Ausgestaltung ist montagetechnisch sehr günstig, da alle wesentlichen Einbauten des Abscheiderbehälters bis auf gegebenenfalls die Einlaufkonstruktion in dem Einsatzbehalter vormontiert und dann zusammen mit diesem als Einheit eingesetzt werden können.

Um möglichst lange Strömungswege zu erzielen, ist vorzugsweise vorgesehen, daß der Einsatzbehälter sich annähernd über die gesamte lichte Weite des Abscheiderbehälters erstreckt, so daß der Strömungskanal die Länge eines Vielfachen des Durchmessers des Abscheiderbehälters umfaßt.

Günstige Strömungseigenschaften lassen sich erzielen, wenn der Strömungskanal über seine gesamte Länge einen im wesentlichen konstanten Querschnitt aufweist, was beispielsweise dadurch erreicht werden kann, daß die Leitwände in gleichem Abstand untereinander sowie zur Wandung des Einsatzbehalters angeordnet werden.

Um die Strömungswege im Abscheiderbehälter außerhalb des Einsatzbehälters zu verlängern und um insbesondere Kurzschlußströmungen zwischen dem Einlaß des Abscheiderbehälters und dem Zulauf des Einsatzbehälters zu vermeiden, ist in Weiterbildung der Erfindung vorgesehen, daß der Zulauf des Einsatzbehälters auf der dem Einlaß des Abscheiderbehälters abgewandten Seite angeordnet ist, so daß das zu reinigende Flüssigkeitsgemisch zunächst den gesamten Abscheiderbehälter durchströmen muß, bevor es in den Einsatzbehälter eintreten kann.

Um die Reinigungswirkung in dem Einsatzbehälter zu erhöhen und um insbesondere auch feinste Öltröpfchen zurückhalten zu können, können in dem Strömungskanal ein oder mehrere Koaleszenzfilter angeordnet sein, die von der zu reinigenden Flüssigkeit durchströmt werden müssen.

Darüber hinaus ist es möglich, eine Beruhigung und insbesondere Vergleichsmäßigung der Strömung zu erreichen, wenn in dem Strömungskanal ein oder mehrere Lochbleche oder entsprechende die Strömung beeinflussende Vorrichtungen angeordnet sind.

Es hat sich gezeigt, daß insbesondere bei einem mäanderförmigen Strömungskanal an den Umlenkpunkten, an denen die Flüssigkeit eine Richtungsänderung von bis zu 180° erfährt, turbulente Strömungen oder Strudel auftreten können, was darin begründet liegt, daß in diesem Bereichen Abrißkanten und spitzwinklige Ecken vorhanden sind. Um entsprechende, die Reinigungswirkung herabsetzende Erscheinungen zu vermeiden, sollte in bevorzugter Ausgestaltung der Erfindung vorgesehen sein, daß die den Strömungskanal begrenzenden Wandungen und/oder die freien vertikalen Kanten der Leitwand, um die der Strömungskanal herumgeführt ist, im Übergangsbereich zwischen den Kanalabschnitten abgerundet sind. Es hat sich gezeigt, daß aufgrund dieser Abrundungen über die gesamte Länge des Strömungskanals eine laminare Strömung zu erzielen ist, was sich in einem sehr guten Reinigungsgrad der Flüssigkeit niederschlagt.

Wahrend des Durchströmens des Abscheiderbehälters steigen die größeren Öltröpfchen bereits an die Oberfläche auf und sammeln sich dort zu einer Öl- bzw. Leichtflüssigkeitsschicht. Um zuverlässig zu vermeiden, daß die bereits abgeschiedenen Öltröpfchen in den Einsatzbehälter gelangen, kann dessen Zulauf in seinem unteren Bereich d.h. unterhalb der sich im Abscheiderbehälter maximal einstellenden Leichtflüssigkeitsschicht angeordnet sein, wodurch gewährleistet ist, daß nur vorgereinigte Flüssigkeit in den Strömungskanal eintritt. Dies ist insbesondere sichergestellt, wenn der Zulauf des Einsatzbehälters in dessen Boden oder in Bodenhöhe angeordnet ist.

Wenn der Durchsatz an Flüssigkeit erhöht werden soll, können mehrere Strömungskanäle parallel angeordnet werden. Alternativ kann der Zulauf in zwei parallel durchströmte Kanalabschpitte verzweigen, die stromab in einen gemeinsamen weiterführenden Kanalabschnitt münden.

Weitere Einzelheiten und Merkmale der Erfindung sind aus der folgenden Beschreibung von Ausführungsbeispielen unter Bezugnahme auf die Zeichnung ersichtlich. Es zeigen:
- Figuren 1a, 1b: einen Flüssigkeitsabscheider gemäß einer ersten Ausführungsform in Aufsicht und im Querschnitt,
- Figuren 2a, 2b: eine Abwandlung des Flüssigkeitsabscheiders gemäß den Figuren 1a und 1b,
- Figuren 3a, 3b: einen Flüssigkeitsabscheider gemäß einer zweiten Ausführungsform in Aufsicht und im Querschnitt,
- Figuren 4a, 4b: einen Flüssigkeitsabscheider gemäß einer dritten Ausführungsform in Aufsicht und im Querschnitt,
- Figuren 5a, 5b: eine Abwandlung des Flüssigkeitsabscheiders gemäß Figuren 4a und 4b und
- Figuren 6a, 6b: einen Flüssigkeitsabscheider gemäß einer vierten Ausführungsform in Aufsicht und im Querschnitt.

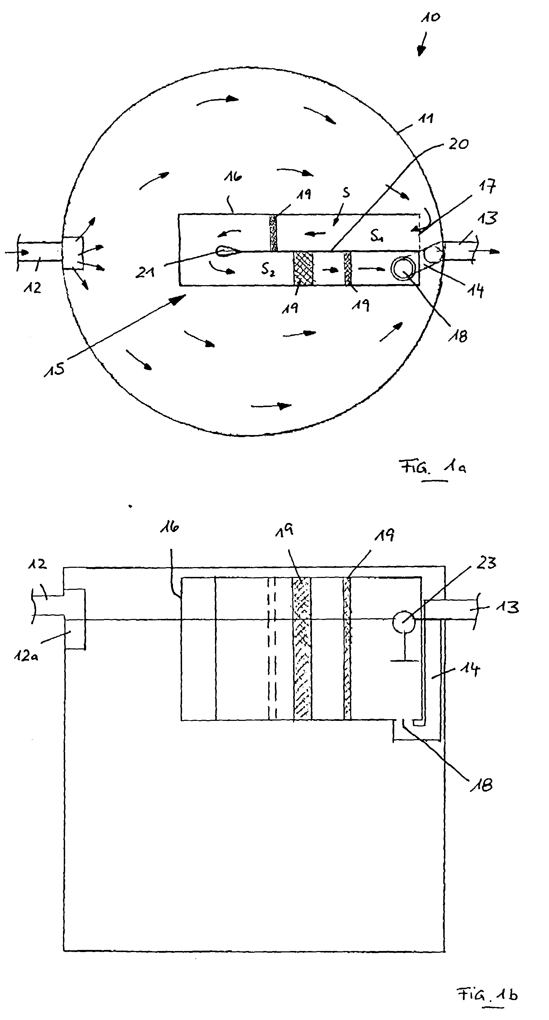

Gemäß den Figuren 1a und 1b weist ein Flüssigkeitsabscheider 10 einen Abscheiderbehälter 11 auf, der einen Kreisquerschnitt besitzt. Nahe der Oberseite des Abscheiderbehälters 11 ist ein Einlaß 12 vorgesehen, an den sich eine Einlaßschikane 12a anschließt, die das zugeführte, zu reinigende Flüssigkeitsgemisch nach unten zum Boden des Abscheiderbehälters 11 richtet.

Dem Einlaß 12 diametral gegenüberliegend ist im Abscheiderbehälter 11 ein Auslaß 13 vorgesehen, durch den die gereinigte Flüssigkeit den Abscheiderbehälter 11 verläßt.

Als einziges Einbauteil im Abscheiderbehälter 11 ist ein langgestreckter, in Aufsicht rechteckiger Einsatzbehälter 15 vorgesehen, der sich von dem Auslaß 13 in Richtung des Einlasses 12 erstreckt und - wie Figur 1b zeigt - im oberen Drittel der Höhe des Abscheiderbehälters 11 angeordnet ist. Das äußere Gehäuse 16 des Einsatzbehälters 15 ist durch eine in Längsrichtung verlaufende Leitwand 20 in zwei Strömungskanalabschnitte S1 und S2 gleichen Querschnitts unterteilt. Auf der dem Einlaß 12 abgewandten Seite des Einsatzbehälters 15 ist ein Zulauf 17 ausgebildet, der unterhalb der sich im Abscheiderbehälter 11 maximal einstellenden Leichtflüssigkeitsschicht angeordnet ist und der zu reinigenden Flüssigkeit den Zugang zu dem Strömungskanalabschnitt S1 ermöglicht, in dem desweiteren ein Koaleszenzfilter 19 angeordnet ist, das durchströmt werden muß. An dem dem Zulauf 17 entgegengesetzten Ende des Einsatzbehälters 15 wird der Strömungskanal um 180° umgelenkt, wobei zur Vermeidung von Turbulenzen die dort angeordnete freie, vertikale Kante der Leitwand 20 mit einem abgerundeten, im wesentlichen tropfenförmigen Querschnitt versehen ist. Nach der Umlenkung tritt die Flüssigkeit in den parallel zum Strömungskanalabschnitt S1 verlaufenden Strömungskanalabschnitt S2 ein, durchströmt zwei in diesem angeordnete Koaleszenzfilter 19 und gelangt dann am Ende des Strömungskanalsabschnitt S2 durch einen unteren, mittels eines schwimmergesteuerten Verschlusses 23 verschließbaren Ablaufs 18 in ein Steigrohr 14, das zum Auslaß 13 des Abscheiderbehälters 11 führt.

Wie insbesondere Figur 1b zeigt, ist der untere Bereich des Abscheiderbehälters durch keinerlei Einbauten gestört, so daß in diesem Bereich eine wirksame Schwerkrafttrennung zwischen leichteren Öltröpfchen und schwereren Schlammanteilen erfolgen kann.

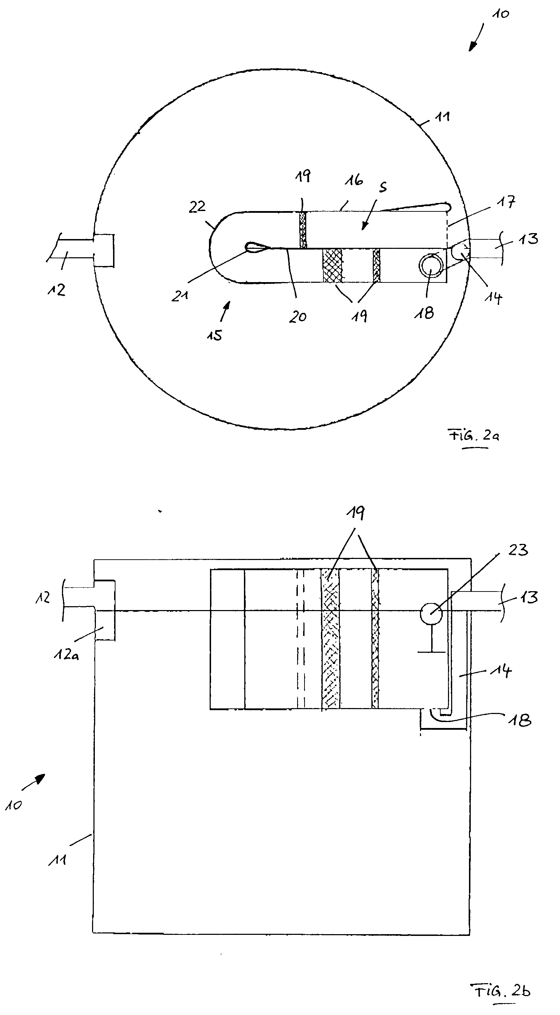

Die Figuren 2a und 2b zeigen eine Abwandlung des Flüssigkeitsabscheiders gemäß den Figren 1a und 1b und unterscheiden sich von diesem lediglich dadurch, daß das dem Einlaß 12 des Abscheiderbehälters 11 zugewandte Ende des Gehäuses 16 des Einsatzbehälters 15 abgerundet ist, so daß im Umlenk- bzw. Übergangsbereich des Strömungskanals S zwischen dem ersten Strömungskanalabschnitt S1 und dem zweiten Strömungskanalabschnitt S2 eine stetige, kontinuierliche Umlenkung unter Vermeidung von Kanten, Abstufungen oder Abrißkanten gegeben ist.

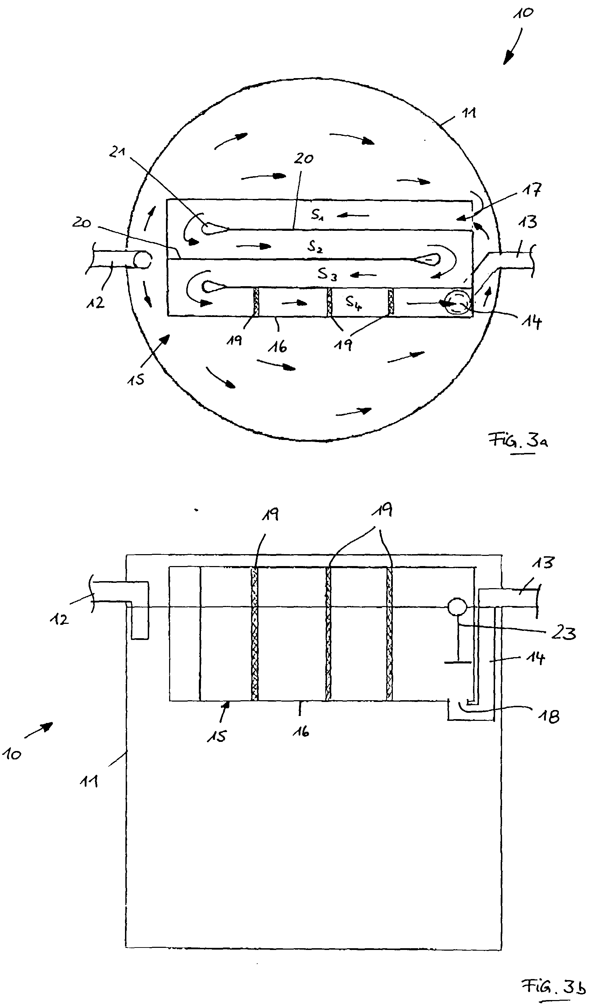

Bei den vorgenannten Ausführungsbeispielen bestand der Strömungskanal S im Einsatzbehälter 15 aus zwei parallelen, nacheinander durchströmten Strömungskanalabschnitten S1 und S2, d.h. der Strömungskanal wies einen U-förmigen Verlauf auf. In den Figuren 3a und 3b ist eine Weiterbildung des Einsetzbehalters vorgesehen, wobei der Strömungskanal von vier parallelen Strömungskanalabschnitten S1, S2, S3 und S4 gebildet ist, die nacheinander durchstromt werden. Nachdem die Flüssigkeit durch den Zulauf 17 in den Strömungskanalabschnitt S1 eingetreten und zum entgegengesetzten Ende des Abscheiderbehälters geströmt ist, wird sie dort in genannter Weise umgelenkt und strömt im Strömungskanalabschnitt S2 zur Zulaufseite zurück. Dort tritt sie jedoch nicht aus dem Einsatzbehälter aus, sondern wird nochmals in genannter Weise umgelenkt und strömt wieder zum entgegengesetzten Ende des Einsatzbehälters 15 zurück, erfährt dort eine nochmalige Umlenkung um 180° und strömt dann im letzten Strömungskanalabschnitt nach durchströmen dreier Koaleszenzfilter 19 zum Ablauf 18 und von dort in den Auslaß 13 des Abscheiderbehälters 11. Somit ist statt eines U-förmigen Verlaufs hier ein mäanderförmiger Verlauf aus insgesamt vier parallelen, nacheinander durchströmten Strömungskanalabschnitten gegeben.

Darüber hinaus ist bei dem Ausführungsbeispiel gemäß den Figuren 3a und 3b der Einsatzbehälter 15 so groß ausgebildet, daß er praktisch die gesamte lichte Weite des Abscheiderbehälters 11 einnimmt.

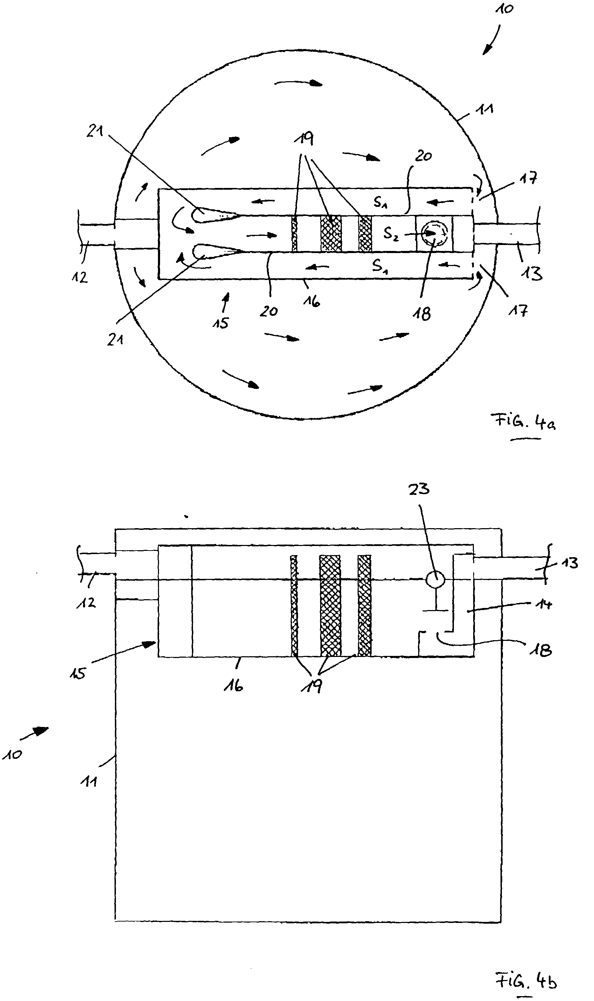

Das Ausführungsbeispiel gemaß den Figuren 4a und 4b zeigt im Einsatzbehälter 15 drei parallel angeordnete Strömungskanalabschnitte, von denen die beiden äußeren auf der dem Einlaß 12 abgewandten Seite des Einsatzbehälters 15 mit einem Zulauf 17 versehen sind. Nach Eintritt in die Strömungskanalabschnitte S1 strömt das Flüssigkeitsgemisch zur entgegengesetzten Seite des Einsatzbehälters 15, wird dort in genannter Weise um 180° umgelenkt und tritt dann in einen gemeinsamen, mittleren Strömungskanalabscbnitt S2 ein, in dem es dem Ablauf 18 zugeführt wird.

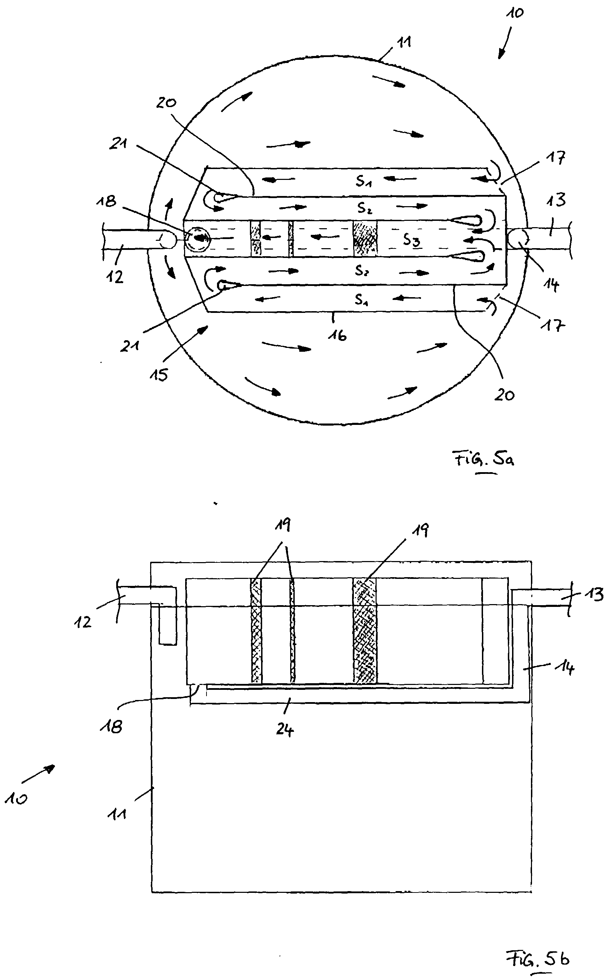

Eine Weiterbildung dieses Flüssigkeitsabscheiders ist in den Figuren 5a und 5b gezeigt, wobei hier fünf parallel angeordnete Flüssigkeitskanalabschnitte vorgesehen sind, von denen die beiden äußeren jeweils einen Zulauf 17 besitzen. Die Flüssigkeit kann in die beiden äußeren Strömungskanalabschnitte S1 eintreten und in diesen zur entgegengesetzten Seite des Einsatzbehälters 15 strömen. Dort werden die beiden Teilströmungen jedoch noch nicht zusammengeführt, sondern jeweils separat um 180° umgelenkt und zur Zulaufseite in getrennten Strömungskanalabschnitten S2 zurückgeführt. Erst bei Erreichen der Zulaufseite treten die beiden Teilströmungen nach Umlenkung um 180° in den mittleren Strömungskanalabschnitt S3 ein und strömen in diesem wieder zur entgegengesetzten Seite, an der der Ablauf 18 ausgebildet ist, an dem die Flüssigkeit in ein unterhalb des Einsatzbehälters verlaufendes Rückführungsrohr 24 eintritt, das nahe dem Auslaß 13 des Abscheiderbehälters 11 in das Steigrohr 15 übergeht.

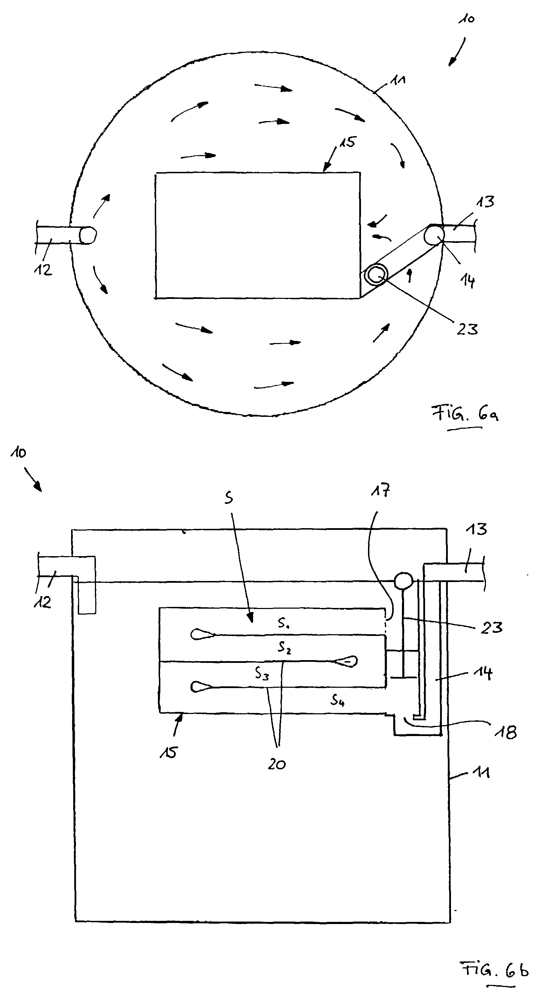

Die Figuren 6a und 6b zeigen ein Ausführungsbeispiel eines Flüssigkeitsabscheiders 10, bei dem der Strömungskanal S sich innerhalb des Einsatzbehälters 15 mäanderförmig von oben nach unten erstreckt. Dies wird dadurch erreicht, daß die Leitwände 20 im wesentlichen horizontal ausgerichtet mit Versatz übereinander angeordnet sind, so daß die in den Strömungskanal S eingetretene Flüssigkeit entlang der einzelnen Strömungskanalabschnitte S1 bis S4 nach unten strömen muß, bevor sie am Ablauf 18 in das Steigrohr 14 und somit zum Auslaß 13 des Abscheiderbehälters 11 gelangt. Damit sich im Einsatzbehälter 15 eventuell ansammelnde Leichtflüssigkeit abströmen kann, sollten die Leitwände 20 mit einer geringen Neigung gegenüber der Horizontalen und/oder gegebenenfalls mit kleinen Abströmöffnungen versehen sein.

## Patentansprüche

1. Flüssigkeitsabscheider, insbesondere zum Trennen von Gemischen aus Wasser und spezifisch leichteren Flüssigkeiten wie Öl, Benzin, Fett und dergleichen, mit einem Abscheiderbehälter (11), der einen Einlaß (12) und einen Auslaß (13) aufweist, und mit einem im Abscheiderbehälter (11) angeordneten Einsatzbehälter (15), der einen Zulauf (17) und einen Ablauf (18) sowie zumindest eine Leitwand (20) aufweist, die einen Strömungskanal (S) zwischen dem Zulauf (17) und dem mit den Auslaß (13) des Abscheiderbehälters (11) verbundenen Ablauf (18) definiert, wobei der Strömungskanal (S) zumindest zwei parallel verlaufende, nacheinander durchströmte Kanalabschnitte (S1, S2; S1-S3; S1-S4) aufweist.

2. Flüssigkeitsabscheider nach Anspruch 1, dadurch gekennzeichnet, daß der Strömungskanal (S) einen U-förmigen oder einen mäanderförmigen Verlauf hat.

3. Flüssigkeitsabscheider nach Anspruch 1 oder 2, dadurch gekennzeichnet, daß mehrere ebene Leitwände (20) im Abstand versetzt zueinander angeordnet sind.

4. Flüssigkeitsabscheider nach einem der Ansprüche 1 bis 3, dadurch gekennzeichnet, daß die Leitwände (20) im wesentlichen vertikal ausgerichtet sind.

5. Flüssigkeitsabscheider nach einem der Ansprüche 1 bis 3, dadurch gekennzeichnet, daß die Leitwände (20) im wesentlichen horizontal ausgerichtet sind.

6. Flüssigkeitsabscheider nach einem der Ansprüche 1 bis 5, dadurch gekennzeichnet, daß der Einsatzbehalter (15) das einzige Einbauteil des Abscheiderbehälters (11) ist.

7. Flüssigkeitsabscheider nach einem der Ansprüche 1 bis 6, dadurch gekennzeichnet, daß der Einsatzbehälter (15) sich annähernd über die gesamte Weite des Abscheiderbehälters (11) erstreckt.

8. Flüssigkeitsabscheider nach einem der Ansprüche 1 bis 7, dadurch gekennzeichnet, daß der Strömungskanal (S) über seine gesamte Länge einen im wesentlichen konstanten Querschnitt aufweist.

9. Flüssigkeitsabscheider nach einem der Ansprüche 1 bis 8, dadurch gekennzeichnet, daß der Zulauf (17) des Einsatzbehälters (15) auf der dem Einlaß (12) des Abscheiderbehälters (11) abgewandten Seite angeordnet ist.

10. Flüssigkeitsabscheider nach einem der Ansprüche 1 bis 9, dadurch gekennzeichnet, daß in dem Strömungskanal (S) ein oder mehrere Koaleszenzfilter (19) angeordnet sind.

11. Flüssigkeitsabscheider nach einem der Ansprüche 1 bis 10, dadurch gekennzeichnet, daß in dem Strömungskanal (S) eine oder mehrere Vorrichtungen zur Beruhigung und Vergleichmäßigung der Strömung, insbesondere Lochbleche angeordnet sind.

12. Flüssigkeitsabscheider nach einem der Ansprüche 1 bis 11, dadurch gekennzeichnet, daß die dem Strömungskanal (S) begrenzenden Wandungen (22) und/oder die freien vertikalen Kanten (21) der Leitwand (20) im Übergangsbereich zwischen dem Kanalabscbnitten (S1, S2) abgerundet sind.

13. Flüssigkeitsabscheider nach einem der Ansprüche 1 bis 12, dadurch gekennzeichnet, daß der Zulauf (17) des Einsatzbehälters (15) in dessen unterem Bereich unterhalb der sich im Abscheiderbehälter (11) maximal einstellenden Leichtflüssigkeitsschicht angeordnet ist.

14. Flüssigkeitsabscheider nach Anspruch 13, dadurch gekennzeichnet, daß der Zulauf (17) des Einsatzbehälters (15) in dessen Boden oder in Bodennähe angeordnet ist.

15. Flüssigkeitsabscheider nach einem der Ansprüche 1 bis 11, dadurch gekennzeichnet, daß der Zulauf (17) in zwei parallel durchströmte Kanalabschnitte (S1) verzweigt, die stromab in einen gemeinsamen, weiterführenden Kanalabschnitt (S2) münden.
